# EUROPEAN PATENT APPLICATION

(11) **EP 3 299 106 A1**
(43) Date of publication of application: **28.03.2018**
(21) Application number: 16799905.1
(22) Date of filing: 18.05.2016
(51) Int. Cl.: B23K 1/00, B23K 1/19, B23K 31/02, B23K 35/22, B23K 35/28, C22C 21/00, F28F 9/16, B23K 101/14, B23K 103/10

(54) **METHOD OF MANUFACTURING ALUMINUM STRUCTURE**

(30) Priority: 22.05.2015 JP 2015104431
(71) Applicant: UACJ Corporation, Tokyo 100-0004 (JP)
(72) Inventor: ITOH Yasunaga, Tokyo 100-0004 (JP); YANAGAWA Yutaka, Tokyo 100-0004 (JP); YAMAYOSHI Tomoki, Tokyo 100-0004 (JP); NINOMIYA Junji, Tokyo 100-0004 (JP); YANAGIMOTO Tsubasa, Tokyo 100-0004 (JP)
(74) Representative: Kramer Barske Schmidtchen Patentanwälte PartG mbB
(86) International application number: PCT/JP2016/064777
(87) International publication number: WO 2016/190199

(57) **Abstract**

A manufacturing method is provided in which, in an aluminum structure comprising a hollow structure and a tubular member, robust fillets can be formed easily on an outer surface of the hollow structure. A clad plate is prepared that: has a multi-layer structure of two layers or three or more layers, comprising a core layer composed of an aluminum material and a filler-material layer disposed on only one surface side of the core layer; and contains, in at least one layer of the multi-layer structure, an element that breaks down an oxide film. A tubular member (3) is prepared that is composed of an aluminum material. A hollow structure (20) is manufactured, the outer-surface side of which is composed of the filler-material layer and which has a through hole (211) into which the tubular member (3) is inserted, from the clad plate. The aluminum structure (1) is assembled in which the tubular member (3) is inserted into the through hole (211) and an end part of the tubular member (3) is disposed in the interior of the hollow structure (20). The aluminum structure (1) is heated in an inert-gas atmosphere, and brazing is performed in which the hollow structure (20) and the tubular member (3) are joined by the filler-material layer of the clad plate.

## Description

### TECHNICAL FIELD

The present invention relates to a method of manufacturing an aluminum structure comprising a hollow structure and a tubular member that is inserted into the hollow structure.

### BACKGROUND ART

Aluminum materials have various advantages such as high thermal conductivity and lightweightness. Consequently, studies have been actively carried out in recent years to make parallel-flow-type heat exchangers, which are incorporated in air conditioners, automobiles, and the like, of aluminum (e.g., Patent Document 1).

As exemplified by a parallel-flow-type heat exchanger, an aluminum structure, which comprises a hollow structure having a through hole and a tubular member inserted into the through hole, is normally manufactured by brazing the hollow structure and the tubular member. As a method of brazing the aluminum structure, so-called flux-brazing methods are often used in which brazing is performed by using a filler material composed of an Al-Si (aluminum-silicon) alloy, applying a fluoride-based flux onto the filler material, and then heating the object to be processed in a nitrogen atmosphere. The filler material is provided on an inner surface and an outer surface of the hollow structure and, depending on the situation, may be provided also on an outer surface of the tubular member.

However, in flux-brazing methods, if the flux application amount is insufficient, then there is a risk that oxide films present on the surfaces of the aluminum materials to be brazed will be insufficiently broken down. As a result, this will lead to a decrease in brazeability and, depending on the situation, there is a risk that brazing failures will occur.

In addition, in a heat exchanger for example, there is a process in which the outer surface of the aluminum structure is subject to a surface treatment; in this process, the cost of the operation of washing off flux residue using an acid or the like is viewed as a problem. Furthermore, in recent years, there has been a strong demand to significantly reduce the size and weight of heat exchangers, particularly heat exchangers for automobiles; in accordance with this, coolant passageways in the interior of the heat exchanger are being miniaturized. Consequently, the problem arises in which, after brazing is performed, the coolant passageways become clogged by flux residue.

In addition, there is a problem in that fluoride-based fluxes used in flux-brazing methods react with and are consumed by Mg (magnesium) contained in the aluminum material, which leads to a degradation of brazeability. Consequently, in flux-brazing methods, the brazing of high-strength materials containing Mg is difficult. In addition, because high-strength materials cannot be used, there is a limit to the reduction of the wall thickness of the aluminum material and, in turn, to the reduction in the weight of the aluminum structure.

Accordingly, so-called fluxless-brazing methods have been proposed in which Mg or the like, which functions to break down the oxide film, is added to the filler material, and brazing is performed in an inert-gas atmosphere without using flux. For example, in Patent Document 2, a method is proposed in which brazing is performed without flux in a nonoxidative-gas atmosphere using an Al-Si-Mg alloy filler material.

### PRIOR ART LITERATURE

### Patent Documents

Patent Document 1 Japanese Laid-open Patent Publication 2012-67994
Patent Document 2 Japanese Laid-open Patent Publication HI 1-285817

### SUMMARY OF THE INVENTION

### PROBLEMS TO BE SOLVED BY THE INVENTION

However, fluxless-brazing methods have a problem in that, compared with flux-brazing methods, the quality of the brazed joint(s) tends to degrade depending on: the shape, the structure, and the like of the object to be processed; and the location at which the brazed joint is formed. For example, if the hollow structure and the tubular member are brazed using a fluxless-brazing method, then there is a problem in that the filler produced by the heating is drawn into the interior of the hollow structure, and therefore fillets tend not to be formed on the outer surface of the hollow structure. There is a risk that the occurrence of fillet tearings or the like on the outer surface of the hollow structure will become a problem from the standpoint of external appearance, which is not preferable.

To improve brazeability in fluxless-brazing methods, methods are also conceivable in which the oxygen concentration, the dew point, or the like is/are decreased to increase the purity of an inert gas, or else high purity argon gas is used as the inert gas. However, in these methods, there are problems from the standpoint of productivity and cost in addition to the effect of forming fillets on the outer surface of the hollow structure being insufficient; therefore, it is problematic to apply these methods in mass-production facilities.

In addition, at the joint between the hollow structure and the tubular member, it is necessary to make the size of the through hole, through which the tubular member is inserted, slightly larger than the tubular member. Consequently, a certain amount of clearance is formed between the outer surface of the tubular member and the hollow structure. Methods are also being studied to improve brazeability by precisely controlling this clearance; however, the same as discussed above, it is problematic to apply the above-mentioned methods on an industrial scale owing to the problems in the brazeability improvement effect, productivity, and cost.

The phenomenon of the filler being drawn into the interior of the hollow structure is conceivably caused by, for example, the following mechanism. In fluxless-brazing methods, brazing progresses by an element or elements-such as Mg added to the filler material, the core, or the like-breaking down the oxide films present on the surfaces of the filler material and the opposing material. During the interval from when heating starts until the filler material begins melting, Mg and the like diffuses within the solid filler material and migrates to the surface. Consequently, during the interval until the filler material begins to melt, the breakdown of the oxide film of the filler material advances slowly, and the oxide film of the opposing material scarcely breaks down at all.

Immediately after the filler material has begun to melt, the oxide films of both the filler material and the opposing material are not sufficiently broken down. Consequently, the formation of the fillets progresses slowly.

At this time, in the interior of the hollow structure, the amount of oxygen in the atmosphere decreases owing to the oxidation of the inner surface, etc. of the hollow structure. In addition, it is difficult for the atmosphere to flow from the exterior space into the interior of the hollow structure. As a result thereof, the oxygen concentration of the atmosphere in the interior of the hollow structure is lower than in the exterior space. Consequently, the oxide film(s) present in the interior of the hollow structure breaks down faster than in the oxide film(s) present outside of the hollow structure. As a result, the filler material present in the interior of the hollow structure can flow sooner than the filler material present on the exterior, and therefore fillets are formed precedently in the interior of the hollow structure, that is, for example, on the interior surface of a join part between the tubular member and the hollow structure.

When the melting of the filler material further progresses and the filler on the outer surface of the hollow structure becomes capable of flowing, the state results in which the interior and the exterior of the hollow structure are connected via the filler. For that reason, the filler on the outer surface is drawn into the interior of the hollow structure, and therefore it becomes difficult for fillets to form on the outer surface of the hollow structure.

In addition to the problem of stably forming a satisfactory brazed joint as discussed above, there are significant limitations on usable materials, brazing equipment, and the like in the brazing of an aluminum structure using a fluxless-brazing method. Consequently, an example in which brazing of aluminum structures using a fluxless-brazing method has continued over a long term on an industrial scale has not existed up to now. However, a fluxless-brazing method could solve problems with flux-brazing methods, in which it is difficult: to be able to avoid the adverse effects of flux-induced clogging, flux residue, and the like, to be able to avoid the occurrence of brazing failures due to coating unevenness of the flux, to be able to use high-strength materials, to be able to decrease the wall thickness of the aluminum material, etc. Consequently, there is a strong demand to put a fluxless-brazing method into practical use.

The present invention considers this background, and it is an object of the present invention to provide a manufacturing method in which, in an aluminum structure comprising a hollow structure and a tubular member, robust fillets can be formed easily on an outer surface of the hollow structure.

### MEANS FOR SOLVING THE PROBLEMS

In one aspect of the present invention, an aluminum-structure manufacturing method comprises:
preparing a clad plate that: has a multi-layer structure of two layers or three or more layers that include a core layer composed of an aluminum material and a filler-material layer composed of an Al-Si alloy disposed on only one surface side of the core layer; and contains, in at least one layer of the multi-layer structure, an element that breaks down an oxide film;
preparing a tubular member composed of an aluminum material;
manufacturing a hollow structure from the clad plate, the outer-surface side of the hollow structure being composed of the filler-material layer and the hollow structure having a through hole into which the tubular member is inserted;
assembling an aluminum structure in which the tubular member is inserted into the through hole and an end part of the tubular member is disposed in the interior of the hollow structure; and
performing a brazing process in which the aluminum structure is heated in an inert-gas atmosphere, and thereby the hollow structure and the tubular member are joined by the filler-material layer of the clad plate.

### EFFECTS OF THE INVENTION

In the above-mentioned aluminum-structure manufacturing method, the hollow structure is manufactured such that the filler-material layer is disposed on the outer-surface side. In addition, the tubular member is composed of an aluminum material, and the filler material is not present on the outer surface thereof. Consequently, when the brazing process of the aluminum structure begins, the filler-material layer on the outer surface of the hollow structure melts, and thereby filler is produced.

The amount of the filler produced on the outer surface increases as the temperature rises, and eventually becomes capable of flowing. As a result, the filler is supplied precedently to a join part between the tubular member and the outer surface of the hollow structure, and thereby a fillet begins to form.

At this time, because a clearance exists between the tubular member and the hollow structure, some of the filler passes through the through hole and thereby can be supplied also to the interior of the hollow structure. However, because the filler-material layer is not present in the interior of the hollow structure, the breakdown of the oxide film by the Mg and the like does not occur as in conventional fluxless-brazing methods. For that reason, the filler on the outer surface of the hollow structure spreads and wets relatively slowly toward the interior while breaking down the oxide film. Consequently, an excessive decrease in the amount of the filler at the fillet on the outer surface can be easily avoided.

As a result of the above, in the above-mentioned manufacturing method, a robust fillet can be formed easily at the join part between the outer surface of the hollow structure and the tubular member.

In addition, in the above-mentioned manufacturing method, the aluminum structure prior to the brazing process is made into the above-mentioned specific configuration as described above, and thereby a robust fillet can be formed on the outer surface of the hollow structure. Consequently, compared with a method in which the atmosphere is controlled during brazing and the clearance between the tubular member and the hollow structure is controlled, the cost is low and furthermore it is highly effective at forming a robust fillet on the outer surface.

The above-mentioned manufacturing method can also be applied to any application, as long as it is an aluminum structure having a hollow structure and a tubular member, and can be applied particularly suitably to a parallel-flow-type heat exchanger installed in an air conditioner, an automobile, or the like.

### BRIEF DESCRIPTION OF THE DRAWINGS

FIG. 1 is an oblique view that shows the principal parts of a test body that mimics a parallel-flow-type heat exchanger according to a working example.
FIG. 2 is a cross-sectional view of the principal parts of the test body according to the working example.
FIG. 3 is an enlarged view that shows, in a cross-sectional view taken along line III-III of FIG. 2, a join part between a tubular member and a hollow structure.
FIG. 4 is an enlarged view that shows a join part between a header part and a tank part in FIG. 2.

### MODES FOR CARRYING OUT THE INVENTION

In the above-mentioned aluminum-structure manufacturing method, "aluminum materials" that constitute the core layer and the tubular member may be pure aluminum or may be an aluminum alloy.

In addition, the tubular member may be an extruded shape, such as, for example, an extruded tube or an extruded multi-hole pipe, or may be a shaped plate material in which an aluminum plate has been formed into a tube shape. The shaped plate material can also be manufactured from a single-sided brazing sheet, in which a core and a filler material are layered; however, if a single-sided brazing sheet is used, then the filler material must be disposed on an inner surface. The reason why the filler material cannot be provided on the outer surface of the tubular member is as follows.

If the filler material were present on the outer surface of the tubular member, then the state would result in which, when that filler material melts, the interior and the exterior of the hollow structure would be connected via the filler. Consequently, the filler present on the outer surface of the hollow structure would be drawn into the interior and, as a result, there is a risk that this would lead to fillet tearings on the outer surface of the hollow structure.

In addition, if the aluminum structure is a parallel-flow-type heat exchanger, then an outer fin would be disposed between adjacent tubular members. In join parts between the outer fin and the tubular members, the clearance is normally smaller than in the join part between the tubular member and the hollow structure. Consequently, in this situation, filler produced on the outer surface of the tubular member would be supplied precedently to the join parts between the outer fin and the tubular members. As a result, there is a risk that the filler supplied to the join part between the hollow structure and the tubular member would be insufficient, and fillet tearings would tend to occur even more.

To avoid these problems, it is necessary that an aluminum material, which does not function as a filler material, is disposed on the outer surface of the tubular member.

A clad plate constituting the hollow structure has a multi-layer structure that includes the core layer and the filler-material layer. That is, the clad plate may be a two-layer clad plate in which the filler-material layer is disposed on only one surface side of the core layer, or may be a multi-layer clad plate of three or more layers in which an intermediate-material layer, which has a chemical composition that differs from that of the core layer and the filler-material layer, is disposed between the core layer and the filler-material layer.

In addition, the clad plate contains, in at least one layer of the multi-layer structure, an element that breaks down oxide films. Thereby, fluxless brazing can be implemented. For example, Mg (magnesium), Li (lithium), Be (beryllium), Ba (barium), Ca (calcium), and the like are examples of elements that break down oxide films. It is not required that these elements are included in all layers included in the multi-layer structure. For example, if Mg or the like is included in the core layer, then Mg or the like need not be included in the filler-material layer, the intermediate-material layer, etc.

The core layer may be composed of an aluminum alloy having a chemical composition that contains Mg: 0.2%-1.3% (mass%; likewise, hereinbelow), the remainder being composed of Al and unavoidable impurities. Mg contained in the core layer elutes into the filler in the brazing process. For that reason, oxide films present on the surfaces of the hollow structure, the tubular member(s), and the like can be broken down by the Mg that has eluted from the core layer. As a result, robust fillets can be formed more easily.

If the Mg content is less than 0.2%, then there is a risk that the effect of breaking down the oxide films will become insufficient. On the other hand, if the Mg content is more than 1.3%, then, during the brazing process, there is a risk that a phenomenon called "erosion," in which the filler permeates the core layer, will occur and consequently brazeability will decrease. In addition, in this situation, by increasing the amount of Mg that elutes into the filler, there is a risk that the surface tension of the filler will decrease, which will lead to a decrease in the ability to form the fillets.

The filler-material layer may be composed of an aluminum alloy that indispensably contains Si: 6%-13% and further contains one or two or more selected from the group consisting of Mg: 0.2%-1.2%, Li: 0.004%-0.1%, Be: 0.004%-0.1%, and Ca: 0.005%-0.03%, the remainder being composed of Al and unavoidable impurities. By setting the Si content to the above-mentioned specific range, a sufficient amount of the filler can be supplied to the join part(s) present on the outer surface of the hollow structure, and thereby brazeability can be improved.

In addition, by setting the Mg, Li, Be, and Ca contents to the above-mentioned specific ranges, these elements are caused to elute into the filler in the brazing process, and thereby the oxide films present at the join part(s) can be broken down. As a result, robust fillets can be easily formed.

If the Si content in the filler-material layer is less than 6%, then there is a risk that a problem will arise in which the amount of filler produced in the brazing process becomes insufficient, the fluidity of the filler decreases, or the like. As a result, there is a risk that this will lead to a decrease in brazeability. On the other hand, if the Si content is more than 13%, then there is a risk that the filler will flow excessively. In addition, in this situation, cracks tend to occur during the rolling of the filler-material layer.

If the Mg, Li, Be, and Ca contents are less than the above-mentioned specific ranges, then there is a risk that the effect of breaking down the oxide films will become insufficient. On the other hand, if these element contents exceed the above-mentioned specific ranges, then there is a risk that sturdy oxide films originating from the Mg or the like will be formed on the filler-material layer, which will lead to a decrease in brazeability.

The aluminum alloy that constitutes the filler-material layer may further contain Bi (bismuth): 0.004%-0.2%. By Bi being present in the filler, surface tension decreases; as a result, brazeability can be improved. If the Bi content is less than 0.004%, then the effect of decreasing the surface tension will become insufficient. In addition, if the Bi content is more than 0.2%, then cracks tend to occur during rolling of the filler material. Furthermore, in this situation, there is a risk that the surface tension of the filler will decrease excessively and, worse yet, the ability to form fillets will decrease.

If the intermediate-material layer is disposed between the core layer and the filler-material layer, then the intermediate-material layer may be composed of an aluminum alloy having a chemical composition that contains one or two or more selected from the group consisting of Li: 0.05% or more, Be: 0.05% or more, Ba: 0.05% or more, and Ca: 0.05% or more, the remainder being composed of Al and unavoidable impurities. The above-mentioned elements contained in the intermediate-material layer elute into the filler in the brazing process and thereby can break down the oxide films. As a result, robust fillets can be easily formed.

If just one among the above-mentioned four elements is included in the intermediate-material layer, then the effect of breaking down the oxide films can be sufficiently obtained by setting the content of that element to 0.05% or more. In addition, if two or more of the above-mentioned four elements are included in the intermediate-material layer, then the effect of breaking down the oxide films can be sufficiently obtained by setting the content of at least one of the elements to 0.05% or more.

The upper limits of the contents of the above-mentioned four elements vary with the ratio of the thicknesses of the filler-material layer and the intermediate-material layer. Specifically, for the case in which it is assumed that the above-mentioned four elements have all eluted into the filler, the total amount of the above-mentioned elements in the filler is preferably 0.15% or less and more preferably 0.1% or less. For example, if the intermediate-material layer has a thickness that is 1/5^{th} that of the filler-material layer, and Li and Be are included in the intermediate-material layer, then the total amount of the Li and Be in the intermediate-material layer is preferably set to 0.75% or less and more preferably set to 0.5% or less.

If the total amount of the above-mentioned elements in the filler is more than 0.15%, then there is a risk that oxides of the elements will be formed during the brazing process, which will lead to a decrease in brazeability. In addition, if the total amount of the above-mentioned elements in the intermediate-material layer is more than 1.5%, then cracks tend to occur during casting, rolling, or the like of the intermediate material.

The aluminum alloy that constitutes the intermediate-material layer may further contain Si: 4%-13%. In this case, because the filler-material layer and the intermediate-material layer start melting simultaneously during the brazing process, Li and the like in the intermediate-material layer rapidly elute into the filler. As a result, the oxide films can be broken down sooner, and brazeability can be further improved, particularly if the temperature-rise rate is fast.

If the Si content in the intermediate-material layer is less than 4%, then there is a risk that the above-mentioned effect will become insufficient because the start of the melting of the intermediate-material layer will be later. On the other hand, if the Si content is more than 13%, then there is a risk that the amount dissolved in the core layer will increase excessively, which will lead to a decrease in brazeability. In addition, in this situation, cracks tend to occur during rolling of the intermediate material.

The aluminum alloy that constitutes the intermediate-material layer may further contain at least one among Zn: 0.2%-6% and Cu: 0.1%-3%. In this case, because the solidus temperature of the intermediate-material layer will decrease, the rate at which Li and the like diffuses into the filler-material layer immediately before the melting of the filler-material layer can be increased. As a result, the effect of breaking down the oxide films can be improved.

If either of the Zn and Cu contents is less than the above-mentioned ranges, there is a risk that the above-mentioned effect will become insufficient because the solidus temperature of the intermediate-material layer will not decrease sufficiently. On the other hand, if the content of at least one of Zn or Cu exceeds its above-mentioned range, then cracks tend to occur during rolling of the intermediate material.

The aluminum alloy that constitutes the intermediate-material layer may further contain Mg: 0.2%-6%. Mg has the effect of breaking down the oxide films, the same as Li and the like described above. Consequently, by including Mg within the above-mentioned specific range in the intermediate-material layer, the effect of breaking down the oxide films by Mg in addition to Li and the like can be obtained, and thereby the breakdown of the oxide films can be further promoted.

If the Mg content in the intermediate-material layer is less than 0.2%, then there is a risk that the above-mentioned effect produced by Mg will become insufficient. On the other hand, if the Mg content is more than 6%, then cracks tend to occur during rolling of the intermediate material.

Instead of an aluminum alloy that indispensably contains Li and the like as discussed above, the intermediate-material layer of the clad plate may be composed of an aluminum alloy that indispensably contains Mg. That is, the intermediate-material layer may be composed of an aluminum alloy having a chemical composition that contains Mg: 0.2%-6%, the remainder being composed of Al and unavoidable impurities. In this case as well, because the oxide films are broken down by Mg that has eluted into the filler, robust fillets can be formed more easily. If the Mg content in the intermediate-material layer is less than 0.2%, then there is a risk that the above-mentioned effect produced by Mg will become insufficient. On the other hand, if the Mg content is more than 6%, then cracks tend to occur during rolling of the intermediate material.

The aluminum alloy that constitutes the intermediate-material layer may further contain Si: 4%-13%. The functions and effects of Si and the reasons for limits on the contents are the same as for those in the case of the intermediate-material layer that contains Li and the like as described above.

In addition, in either the case in which Li, etc. is indispensably included in the aluminum alloy that constitutes the filler-material layer or the case in which Mg is indispensably included, the aluminum alloy that constitutes the intermediate-material layer may further contain Bi: 0.02%-1.2%. Bi in the intermediate-material layer elutes into the filler and thereby decreases the surface tension of the filler; thus, brazeability can be improved. If the Bi content is less than 0.02%, then the effect of decreasing the surface tension will become insufficient. In addition, if the Bi content is more than 1.2%, then cracks tend to occur during rolling of the intermediate material. Furthermore, in this situation, there is a risk that the surface tension of the filler will decrease excessively and, worse yet, the ability to form fillets will decrease.

In the above-mentioned manufacturing method, the clad plate(s) and the tubular member(s) having the above-mentioned compositions are prepared, after which the hollow structure is manufactured from the clad plate(s). Subsequently, the tubular member(s) is (are) inserted into a through hole or through holes in the hollow structure, the aluminum structure is assembled, and then the brazing process that joins the hollow structure and the tubular member(s) using a fluxless-brazing method is performed.

Here, the hollow structure is preferably etched using an acid or an alkali prior to the brazing process. Thereby, the oxide films formed on the surfaces in the interval up to the formation of the hollow structure are removed. During the interval from after etching has been performed until the brazing process, oxide films form naturally; however, these oxide films are fragile compared to the oxide films that were removed by the etching. For this reason, they can be easily broken down in the brazing process and, as a result, brazeability can be further improved.

An industrially available inert gas, such as nitrogen, argon, or a mixture of nitrogen and argon, can be used as the atmosphere during the brazing process. From the viewpoint of improving brazeability, the lower the oxygen concentration of the inert gas, the better. Specifically, an inert gas having an oxygen concentration of, for example, 50 ppm or less can be suitably used.

The heating temperature during the brazing process is preferably 585°C-620°C and more preferably 590°C-610°C. If the heating temperature is below 585°C, then there is a risk that the fluidity of the filler will become insufficient, which will lead to a decrease in brazeability. On the other hand, if the heating temperature exceeds 620°C, then there is a risk that erosion will occur in the core layer. In addition, from the viewpoint of suppressing unnecessary oxidation of the aluminum structure while the temperature is rising, the temperature-rise rate during the brazing process is preferably as fast as possible.

### Working Examples

### (Working Example)

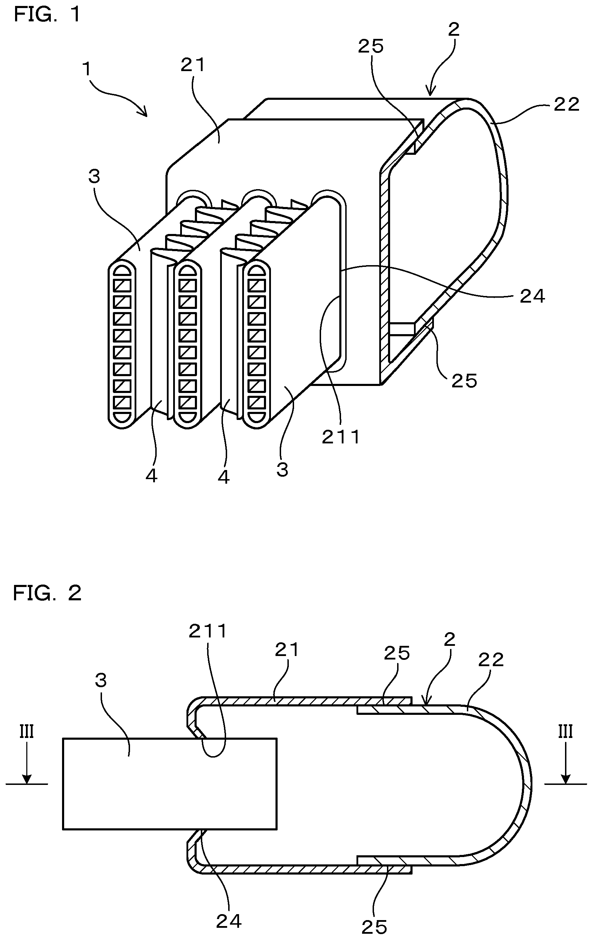

A working example of the aluminum-structure manufacturing method will now be explained, with reference to the drawings. The aluminum structure 1 of the present example has a structure that mimics a parallel-flow-type heat exchanger and, as shown in FIG. 1 and FIG. 2, comprises: a hollow structure 2; a plurality of tubular members 3 that are inserted in the hollow structure 2; and outer fins 4 that are disposed between the adjacent tubular members 3. The hollow structure 2, the tubular members 3, and the outer fins 4 are joined together by a fluxless-brazing method.

As shown in FIG. 1 and FIG. 2, the hollow structure 2 exhibits a tube shape and comprises: a header part 21, which has through holes 211 into which the tubular members 3 are inserted; and a tank part 22, which is disposed opposing the header part 21. The header part 21 and the tank part 22 are manufactured from clad plates each having a multi-layer structure that includes: a core layer, which is composed of an aluminum material; and a filler-material layer, which is composed of an Al-Si alloy and is disposed on only one surface side of the core layer. In addition, the header part 21 and the tank part 22 are each manufactured such that the filler-material layer of the clad plates is disposed on the outer surface of the hollow structure 2. At least one layer of the multi-layer structure of the clad plates contains an element that breaks down oxide films.

The tubular members 3 are composed of an aluminum material. It is noted that FIG. 1 shows an example of an extruded multi-hole pipe formed by extruding an aluminum material; however, instead of the extruded multi-hole pipe, it is also possible to use a shaped plate material formed by processing a plate material into a tube shape. If the shaped plate material is used, then it is necessary to dispose an aluminum material, which does not function as a filler material, on the outer surface thereof.

As shown in FIG. 1, in the present example, the outer fins 4, which are composed of an aluminum material, are disposed between the adjacent tubular members 3. The outer fins 4 are each composed of a two-sided brazing sheet, in which the filler material is disposed on both sides of the core. Each of the outer fins 4 of the present example is a corrugated fin in which the two-sided brazing sheet is formed into a corrugated shape.

After the hollow structure 2 is assembled from the header part 21 and the tank part 22 prepared as described above, the tubular members 3 are inserted into the through holes 211 of the hollow structure 2. Furthermore, the outer fins 4 are disposed between the adjacent tubular members 3, and thereby the aluminum structure 1 shown in FIG. 1 is assembled.

Subsequently, the brazing process is performed that heats the aluminum structure 1 in an inert-gas atmosphere and simultaneously joins the header part 21, the tank part 22, and the tubular members 3 by using the filler-material layers of the clad plates.

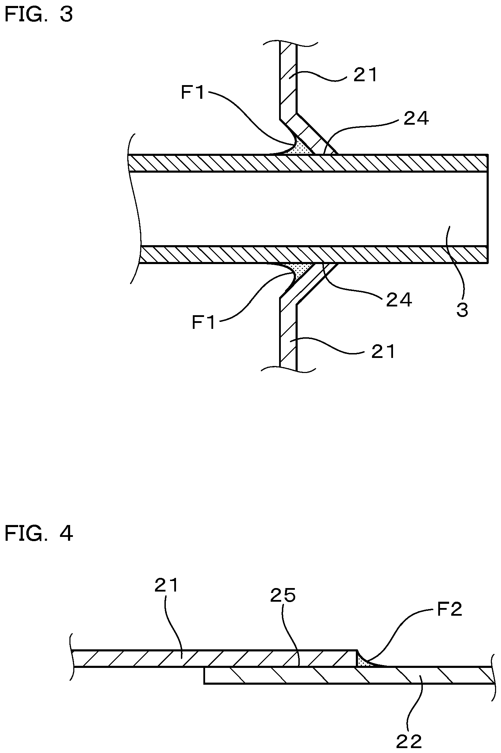

As described above, the filler-material layers of the header part 21 and the tank part 22 are disposed on the outer surface of the hollow structure 2. In addition, a filler material is not disposed on the outer surfaces of the tubular members 3. For that reason, after the brazing process is complete, fillets F1 originating from the filler-material layer of the clad plate are formed, as shown in FIG. 3, at the outer surfaces of join parts 24 between the tubular members 3 and the header part 21. In addition, fillets F2 originating from the filler-material layers of the clad plates as shown in FIG. 4 are also formed at the outer surfaces of join parts 25 between the header part 21 and the tank part 22. It is noted that, for the sake of expedience, the fillets F1 and the fillets F2 are not shown in FIG. 1 and FIG. 2.

In addition, although not shown in the drawings, in the present example, the outer fins 4 are joined to the tubular members 3 by the above-mentioned brazing process. The aluminum structure 1, in which all the component parts are joined by brazing, can be obtained based on the above.

It is noted that, in the aluminum structure 1 of the present example, both ends of the hollow structure 2 in a longitudinal direction are open; however, in an actual parallel-flow-type heat exchanger, both ends of the hollow structure 2 are normally closed up by separately prepared cap parts (not shown). The material of the cap parts is not particularly limited; for example, a single-sided brazing sheet, a two-sided brazing sheet, or the like can be used.

If a brazing sheet is used as the cap part, then the filler material may be disposed facing the outer surface or may be disposed facing the inner surface. As described above, because the filler-material layer is not present on the inner surfaces of the header part 21 and the tank part 22, during the brazing process, the filler of the cap part does not connect the join parts 24 between the tubular members 3 and the header part 21, the join parts 25 between the header part 21 and the tank part 22, and the like via the inner surface. For that reason, even if a filler material is disposed on the inner surface of the cap part, it does not adversely affect the formation of the fillets F1 and the fillets F2.

### (Test Examples)

The present example evaluates brazeability by variously modifying the materials of the clad plates, the tubular members 3, and the like in the above-mentioned working example. A test body fabricating method and evaluating method used in the present example are explained below.

### <Preparation of Component Parts>

### • Header Part 21 and Tank Part 22

Clad plates, in which the layer configurations of the multi-layer structures were variously modified, were prepared as shown in Table 1 to Table 7, after which the header parts 21 and the tank parts 22 shown in FIG. 1 and FIG. 2 were manufactured by press working the clad plates. Materials A1-A15 (refer to Table 1) each comprised a two-layer structure composed of a core layer and a filler-material layer, which was layered on only one surface side of the core layer. Materials B1-B50 (refer to Table 2 to Table 6) each comprised a three-layer structure in which the core layer, the intermediate-material layer, and the filler-material layer were sequentially layered. Materials C1-C2, D1-D6, and E1 (refer to Table 7) each comprised a multi-layer structure of three or more layers, in which the filler-material layer was provided on both sides of the core layer. That is, the hollow structures 2 assembled using the materials C1-C2, D1-D6, and E1 each had filler-material layers on both the outer surface and the inner surface.

The plate thicknesses of the clad plates were all 1.2 mm. The cladding percentages of the filler-material layers, i.e. the percentage of the filler-material layer thickness with respect to the total plate thickness of the clad plate, were all set to 5%. In addition, the cladding percentages of the intermediate-material layers were all set to either 1% or 2.5%, as shown in Table 2 to Table 7.

### • Tubular Members 3

Either shaped plate materials (composed of single-sided brazing sheets) or extruded multi-hole pipes were used as the tubular members 3, as shown in Table 8 to Table 10.

The extruded multi-hole pipes were manufactured from a 1000-series alloy having a chemical composition containing Cu (copper): 0.4% and Mn (manganese): 0.1%, the remainder being composed of Al and unavoidable impurities. In addition, the thickness of wall parts of the extruded multi-hole pipe was set to 0.25 mm.

The shaped plate materials were each manufactured from a single-sided brazing sheet composed of a core and a filler material, which was layered on only one surface side of the core, and had a plate thickness of 0.25 mm. Each shaped plate material exhibited a tube shape, and the filler material was disposed on the outer surface.

The cores of the single-sided brazing sheets were each a 3000-series alloy having a chemical composition containing Si: 0.15%, Cu: 0.1%, Mn: 1.2%, and Mg: 0.3%, the remainder being composed of Al and unavoidable impurities. In addition, the filler materials of the single-sided brazing sheets were each an Al-Si alloy having a chemical composition that contains Si: 10%, Mg: 0.1%, and Bi: 0.05%, the remainder being composed of Al and unavoidable impurities. The cladding percentage of the filler material was set to 10%.

### • Outer Fins 4

The outer fins 4 were manufactured from two-sided brazing sheets each composed of a core and a filler material, which was layered on both sides of the core, and having a plate thickness of 0.1 mm.

The cores of the two-sided brazing sheets were an aluminum alloy having a chemical composition that contains Mn: 1.2%, Mg: 0.4%, and Zn: 0.1%, the remainder being composed of Al and unavoidable impurities. In addition, the filler materials of the two-sided brazing sheets were all an Al-Si alloy having a chemical composition containing Si: 10% and Bi: 0.05%, the remainder being composed of Al and unavoidable impurities. The cladding percentages of the filler materials were all set to 10% on all sides.

### <Assembly of the Test Bodies>

A degreasing treatment was performed by immersing all the above-mentioned component parts in acetone. Next, as shown in Table 1 to Table 7, components composed of some of the clad plates were etched using an acid or an alkali to remove the oxide films. In the cases in which the etching was performed using an acid, the components were immersed for 60 s in an aqueous solution of hydrofluoric acid having a concentration of 2%, after which the components were rinsed and then dried. In addition, if the etching was performed using an alkali, then the components were immersed for 30 s in an aqueous solution of sodium hydroxide having a concentration of 5% and a temperature of 50°C, after which the components were rinsed and then dried.

Subsequently, all the components were assembled as shown in Table 8 to Table 10, after which they were fixed in a jig to assemble the aluminum structures 1 (test bodies 1-78) shown in FIG. 1.

### <Brazing Process>

The brazing process was performed using a nitrogen-gas furnace comprising a preheating chamber and a brazing chamber, which is connected to the preheating chamber, and capable of replacing the interior of the furnace with nitrogen gas. The brazing process was performed in accordance with the following procedure. On each of the test bodies, a thermocouple was attached in the vicinity of a join part 24 between a tubular member 3 and the header part 21, after which the test body was disposed in the preheating chamber. In the preheating chamber, the temperature of the test body was raised to 450°C, after which the test body was moved to the brazing chamber where the temperature of the test body was raised to 600°C. After the temperature of the test body reached 600°C, the test body was immediately moved to the preheating chamber. Furthermore, the interior of the preheating chamber was cooled until the temperature reached 540°C, after which the test bodies were removed to outside the furnace. The brazing process was performed based on the above, and thereby the brazing of the test bodies was completed.

The atmosphere inside the preheating chamber and the brazing chamber in the above-mentioned brazing process was set to a nitrogen atmosphere in which the oxygen concentration was 12-17 ppm. In addition, the time until the test bodies disposed in the preheating chamber reached 450°C was set to approximately 20 min. The temperature-rise time, which is the time until the test bodies that were moved to the brazing chamber reached 600°C, was set to either 12 min or 3 min, as shown in Table 8 to Table 10.

### <Evaluation>

The brazed test bodies were visually observed and the fillet formation states were evaluated. In the present example, two locations were visually observed: the fillets F1 (refer to FIG. 3) formed at the outer surfaces of the join parts 24 between the header part 21 and the tubular members 3; and the fillets F2 (refer to FIG. 4) formed at the outer surfaces of the join parts 25 between the header part 21 and the tank part 22. The results are shown in Table 8 to Table 10.

It is noted that the symbols shown in the "fillet formation state" column in Table 8 to Table 10 correspond to the following states. In states D and E among symbols A-E, an unacceptable determination was made because of the risk that it might lead to a leakage defect.
A: Large-sized fillets were evenly formed.
B: Fillets smaller in size than A were evenly formed.
C: Fillets smaller in size than B or fillets of uneven sizes were formed, but fillet tearings did not occur.
D: Fillet tearings occurred locally and the fillets were discontinuous.
E: Even more fillet tearings occurred or fillets were not formed.

**Table 1**

| Material No. | Configuration | Cladding Percentage (%) | Chemical Composition (Mass%) | | | | | | | | | | | Solidus Temperature of Filler Material (°C) | Etching Treatment |
|---|---|---|---|---|---|---|---|---|---|---|---|---|---|---|---|
| | | | Si | Cu | Mn | Mg | Zn | Li | Be | Ca | Ba | Bi | Al | | |
| A1 | Filler-material layer | 5 | 10 | - | - | - | - | - | - | - | - | - | bal. | 577 | No |
| | Core layer | - | - | - | 1.2 | - | - | - | - | - | - | - | bal. | | |
| A2 | Filler-material layer | 5 | 10 | - | - | - | - | - | - | - | - | - | bal. | 577 | No |
| | Core layer | - | - | - | 1.2 | 0.2 | - | - | - | - | - | - | bal. | | |
| A3 | Filler-material layer | 5 | 10 | - | - | - | - | - | - | - | - | - | bal. | 577 | No |
| | Core layer | - | - | - | 1.2 | 0.6 | - | - | - | - | - | - | bal. | | |
| A4 | Filler-material layer | 5 | 10 | - | - | - | - | - | - | - | - | - | bal. | 577 | No |
| | Core layer | - | - | - | 1.2 | 1.3 | - | - | - | - | - | - | bal. | | |
| A5 | Filler-material layer | 5 | 10 | - | - | - | - | - | - | - | - | - | bal. | 577 | No |
| | Core layer | - | - | - | 1.2 | 1.6 | - | - | - | - | - | - | bal. | | |
| A6 | Filler-material layer | 5 | 10 | - | - | 0.2 | - | - | - | - | - | - | bal. | 575 | No |
| | Core layer | - | - | - | 1.2 | - | - | - | - | - | - | - | bal. | | |
| A7 | Filler-material layer | 5 | 10 | - | - | 1.2 | - | - | - | - | - | - | bal. | 556 | No |
| | Core layer | - | - | - | 1.2 | - | - | - | - | - | - | - | bal. | | |
| A8 | Filler-material layer | 5 | 10 | - | - | - | - | 0.004 | - | - | - | 0.001 | bal. | 577 | Yes (acid) |
| | Core layer | - | - | - | 1.2 | - | - | - | - | - | - | - | bal. | | |
| A9 | Filler-material layer | 5 | 10 | - | - | - | - | 0.1 | - | - | - | - | bal. | 577 | Yes (acid) |
| | Core layer | - | - | - | 1.2 | - | - | - | - | - | - | - | bal. | | |
| A10 | Filler-material layer | 5 | 10 | - | - | - | - | - | 0.004 | - | - | - | bal. | 577 | Yes (acid) |
| | Core layer | - | - | - | 1.2 | - | - | - | - | - | - | - | bal. | | |
| A11 | Filler-material layer | 5 | 10 | - | - | - | - | - | 0.1 | - | - | - | bal. | 577 | Yes (acid) |
| | Core layer | - | - | - | 1.2 | - | - | - | - | - | - | - | bal. | | |
| A12 | Filler-material layer | 5 | 10 | - | - | - | - | - | - | 0.005 | - | - | bal. | 577 | Yes (acid) |
| | Core layer | - | - | - | 1.2 | - | - | - | - | - | - | - | bal. | | |
| A13 | Filler-material layer | 5 | 10 | - | - | - | - | - | - | 0.03 | - | - | bal. | 577 | Yes (acid) |
| | Core layer | - | - | - | 1.2 | - | - | - | - | - | - | - | bal. | | |
| A14 | Filler-material layer | 5 | 10 | - | - | - | - | 0.004 | - | - | - | 0.004 | bal. | 577 | Yes (acid) |
| | Core layer | - | - | - | 1.2 | - | - | - | - | - | - | - | bal. | | |
| A15 | Filler-material layer | 5 | 10 | - | - | - | - | 0.004 | - | - | - | 0.2 | bal. | 577 | Yes (acid) |
| | Core layer | - | - | - | 1.2 | - | - | - | - | - | - | - | bal. | | |

**Table 2**

| Material No. | Configuration | Cladding Percentage (%) | Chemical Composition (Mass%) | | | | | | | | | | | Solidus Temperature of Filler Material (°C) | Etching Treatment |
|---|---|---|---|---|---|---|---|---|---|---|---|---|---|---|---|
| | | | Si | Cu | Mn | Mg | Zn | Li | Be | Ca | Ba | Bi | Al | | |
| B1 | Filler-material layer | 5 | 10 | - | - | - | - | - | - | - | - | - | bal. | 577 | Yes (acid) |
| | Intermediate-material layer | 1 | - | - | - | - | - | 0.05 | - | - | - | - | bal. | | |
| | Core layer | - | - | - | 1.2 | - | - | - | - | - | - | - | bal. | | |
| B2 | Filler-material layer | 5 | 10 | | - | - | - | - | - | - | - | - | bal. | 577 | Yes (acid) |
| | Intermediate-material layer | 1 | - | - | - | - | - | 0.15 | - | - | - | - | bal. | | |
| | Core layer | - | - | - | 1.2 | - | - | - | - | - | - | - | bal. | | |
| B3 | Filler-material layer | 5 | 10 | - | - | - | - | - | - | - | - | - | bal. | 577 | Yes (acid) |
| | Intermediate-material layer | 1 | - | - | - | - | - | - | 0.05 | - | - | - | bal. | | |
| | Core layer | - | - | - | 1.2 | - | - | - | - | - | - | - | bal. | | |
| B4 | Filler-material layer | 5 | 10 | - | - | - | - | - | - | - | - | - | bal. | 577 | Yes (acid) |
| | Intermediate-material layer | 1 | - | - | - | - | - | - | - | 0.05 | - | - | bal. | | |
| | Core layer | - | - | - | 1.2 | - | - | - | - | - | - | - | bal. | | |
| B5 | Filler-material layer | 5 | 10 | - | - | - | - | - | - | - | - | - | bal. | 577 | Yes (acid) |
| | Intermediate-material layer | 1 | - | - | - | - | - | - | - | - | 0.05 | - | bal. | | |
| | Core layer | - | - | - | 1.2 | - | - | - | - | - | - | - | bal. | | |
| B6 | Filler-material layer | 5 | 10 | - | - | - | - | - | - | - | - | - | bal. | 577 | Yes (acid) |
| | Intermediate-material layer | 1 | - | - | - | - | - | 0.05 | 0.02 | 0.02 | 0.02 | - | bal. | | |
| | Core layer | - | - | - | 1.2 | - | - | - | - | - | - | - | bal. | | |
| B7 | Filler-material layer | 5 | 10 | - | - | - | - | - | - | - | - | - | bal. | 577 | Yes (acid) |
| | Intermediate-material layer | 1 | | - | - | - | - | - | 0.05 | 0.05 | 0.05 | - | bal. | | |
| | Core layer | - | - | - | 1.2 | - | - | - | - | - | - | - | bal. | | |
| B8 | Filler-material layer | 5 | 10 | - | - | - | - | - | - | - | - | - | bal. | 577 | Yes (acid) |
| | Intermediate-material layer | 1 | - | - | - | - | - | 0.6 | - | - | - | - | bal. | | |
| | Core layer | - | - | - | 1.2 | - | - | - | - | - | - | - | bal. | | |
| B9 | Filler-material layer | 5 | 10 | - | - | - | - | - | - | - | - | - | bal. | 577 | No |
| | Intermediate-material layer | 1 | - | - | - | - | - | 0.1 | - | - | - | - | bal. | | |
| | Core layer | - | - | - | 1.2 | 0.6 | - | - | - | - | - | - | bal. | | |
| B10 | Filler-material layer | 5 | 10 | - | - | - | - | - | - | - | - | - | bal. | 577 | No |
| | Intermediate-material layer | 1 | - | - | - | - | - | - | 0.1 | - | - | - | bal. | | |
| | Core layer | - | - | - | 1.2 | 0.6 | - | - | - | - | - | - | bal. | | |

**Table 3**

| Material No. | Configuration | Cladding Percentage (%) | Chemical Composition (Mass%) | | | | | | | | | | | Solidus Temperature of Filler Material (°C) | Etching Treatment |
|---|---|---|---|---|---|---|---|---|---|---|---|---|---|---|---|
| | | | Si | Cu | Mn | Mg | Zn | Li | Be | Ca | Ba | Bi | Al | | |
| B11 | Filler-material layer | 5 | 10 | - | - | - | - | - | - | - | - | - | bal. | 577 | No |
| | Intermediate-material layer | 1 | 2 | - | - | - | - | - | 0.1 | - | - | - | bal. | | |
| | Core layer | - | - | - | 1.2 | 0.6 | - | - | - | - | - | - | bal. | | |
| B12 | Filler-material layer | 5 | 10 | - | - | - | - | - | - | - | - | - | bal. | 577 | No |
| | Intermediate-material layer | 1 | 4 | - | - | - | - | - | 0.1 | - | - | - | bal. | | |
| | Core layer | - | - | - | 1.2 | 0.6 | - | - | - | - | - | - | bal. | | |
| B13 | Filler-material layer | 5 | 10 | - | - | - | - | - | - | - | - | - | bal. | 577 | No |
| | Intermediate-material layer | 1 | 10 | - | - | - | - | - | 0.1 | - | - | - | bal. | | |
| | Core layer | - | - | - | 1.2 | 0.6 | - | - | - | - | - | - | bal. | | |
| B14 | Filler-material layer | 5 | 10 | - | - | - | - | - | - | - | - | - | bal. | 577 | No |
| | Intermediate-material layer | 1 | 13 | - | - | - | - | - | 0.1 | - | - | - | bal. | | |
| | Core layer | - | - | - | 1.2 | 0.6 | - | - | - | - | - | - | bal. | | |
| B15 | Filler-material layer | 5 | 10 | - | - | - | - | - | - | - | - | - | bal. | 577 | No |
| | Intermediate-material layer | 1 | 16 | - | - | - | - | - | 0.1 | - | - | - | bal. | | |
| | Core layer | - | - | - | 1.2 | 0.6 | - | - | - | - | - | - | bal. | | |
| B16 | Filler-material layer | 5 | 10 | - | - | - | - | - | - | - | - | - | bal. | 577 | No |
| | Intermediate-material layer | 1 | 10 | - | - | - | - | 0.6 | - | - | - | - | bal. | | |
| | Core layer | - | - | - | 1.2 | - | - | - | - | - | - | - | bal. | | |
| B17 | Filler-material layer | 5 | 10 | - | - | - | - | - | - | - | - | - | bal. | 577 | No |
| | Intermediate-material layer | 1 | - | 0.05 | - | - | 0.1 | 0.1 | - | - | - | - | bal. | | |
| | Core layer | - | - | - | 1.2 | 0.6 | - | - | - | - | - | - | bal. | | |
| B18 | Filler-material layer | 5 | 10 | - | - | - | - | - | - | - | - | - | bal. | 577 | No |
| | Intermediate-material layer | 1 | - | - | - | - | 0.2 | 0.1 | - | - | - | - | bal. | | |
| | Core layer | - | - | - | 1.2 | 0.6 | - | - | - | - | - | - | bal. | | |
| B19 | Filler-material layer | 5 | 10 | - | - | - | - | - | - | - | - | - | bal. | 577 | No |
| | Intermediate-material layer | 1 | - | - | - | - | 6 | 0.1 | - | - | - | - | bal. | | |
| | Core layer | - | - | - | 1.2 | 0.6 | - | - | - | - | - | - | bal. | | |
| B20 | Filler-material layer | 5 | 10 | - | - | - | - | - | - | - | - | - | bal. | 577 | No |
| | Intermediate-material layer | 1 | - | - | - | - | 10 | 0.1 | - | - | - | - | bal. | | |
| | Core layer | - | - | - | 1.2 | 0.6 | - | - | - | - | - | - | bal. | | |

**Table 4**

| Material No. | Configuration | Cladding Percentage (%) | Chemical Composition (Mass%) | | | | | | | | | | | Solidus Temperature of Filler Material (°C) | Etching Treatment |
|---|---|---|---|---|---|---|---|---|---|---|---|---|---|---|---|
| | | | Si | Cu | Mn | Mg | Zn | Li | Be | Ca | Ba | Bi | Al | | |
| B21 | Filler-material layer | 5 | 10 | - | - | - | - | - | - | - | - | - | bal. | 577 | No |
| | Intermediate-material layer | 1 | - | 0.1 | - | - | - | 0.1 | - | - | - | - | bal. | | |
| | Core layer | - | - | - | 1.2 | 0.6 | - | - | - | - | - | - | bal. | | |
| B22 | Filler-material layer | 5 | 10 | - | - | - | - | - | - | - | - | - | bal. | 577 | No |
| | Intermediate-material layer | 1 | - | 3 | - | - | - | 0.1 | - | - | - | - | bal. | | |
| | Core layer | - | - | - | 1.2 | 0.6 | - | - | - | - | - | - | bal. | | |
| B23 | Filler-material layer | 5 | 10 | - | - | - | - | - | - | - | - | - | bal. | 577 | No |
| | Intermediate-material layer | 1 | - | 6 | - | - | - | 0.1 | - | - | - | - | bal. | | |
| | Core layer | - | - | - | 1.2 | 0.6 | - | - | - | - | - | - | bal. | | |
| B24 | Filler-material layer | 5 | 10 | - | - | - | - | - | - | - | - | - | bal. | 577 | No |
| | Intermediate-material layer | 1 | 10 | 1.2 | - | - | 3.5 | - | 0.1 | - | - | - | bal. | | |
| | Core layer | - | - | - | 1.2 | 0.6 | - | - | - | - | - | - | bal. | | |
| B25 | Filler-material layer | 5 | 10 | - | - | - | - | - | - | - | - | - | bal. | 577 | No |
| | Intermediate-material layer | 1 | - | 1.2 | - | - | 3.5 | 0.6 | - | - | - | - | bal. | | |
| | Core layer | - | - | - | 1.2 | - | - | - | - | - | - | - | bal. | | |
| B26 | Filler-material layer | 5 | 10 | - | - | - | - | - | - | - | - | - | bal. | 577 | No |
| | Intermediate-material layer | 1 | - | - | - | 0.2 | - | - | - | - | - | - | bal. | | |
| | Core layer | - | - | - | 1.2 | - | - | - | - | - | - | - | bal. | | |
| B27 | Filler-material layer | 5 | 10 | - | - | - | - | - | - | - | - | - | bal. | 577 | No |
| | Intermediate-material layer | 1 | - | - | - | 6 | - | - | - | - | | | bal. | | |
| | Core layer | - | - | - | 1.2 | - | - | - | - | - | - | - | bal. | | |
| B28 | Filler-material layer | 5 | 10 | - | - | - | - | - | - | - | - | - | bal. | 577 | No |
| | Intermediate-material layer | 1 | - | - | - | 8 | - | - | - | - | - | - | bal. | | |
| | Core layer | - | - | - | 1.2 | - | - | - | - | - | - | - | bal. | | |
| B29 | Filler-material layer | 5 | 10 | - | - | - | - | - | - | - | - | - | bal. | 577 | No |
| | Intermediate-material layer | 1 | - | - | - | 3 | - | - | - | - | - | - | bal. | | |
| | Core layer | - | - | - | 1.2 | 0.2 | - | - | - | - | - | - | bal. | | |
| B30 | Filler-material layer | 5 | 10 | - | - | - | - | - | - | - | - | - | bal. | 577 | No |
| | Intermediate-material layer | 1 | 2 | - | - | 3 | - | - | - | - | - | - | bal. | | |
| | Core layer | - | - | - | 1.2 | 0.2 | - | - | - | - | - | - | bal. | | |

**Table 5**

| Material No. | Configuration | Cladding Percentage (%) | Chemical Composition (Mass%) | | | | | | | | | | | Solidus Temperature of Filler Material (°C) | Etching Treatment |
|---|---|---|---|---|---|---|---|---|---|---|---|---|---|---|---|
| | | | Si | Cu | Mn | Mg | Zn | Li | Be | Ca | Ba | Bi | Al | | |
| B31 | Filler-material layer | 5 | 10 | - | - | - | - | - | - | - | - | - | bal. | 577 | No |
| | Intermediate-material layer | 1 | 4 | - | - | 3 | - | - | - | - | - | - | bal. | | |
| | Core layer | - | - | - | 1.2 | 0.2 | - | - | - | - | - | - | bal. | | |
| B32 | Filler-material layer | 5 | 10 | - | - | - | - | - | - | - | - | - | bal. | 577 | No |
| | Intermediate-material layer | 1 | 13 | - | - | 3 | - | - | - | - | - | - | bal. | | |
| | Core layer | - | - | - | 1.2 | 0.2 | - | - | - | - | - | - | bal. | | |
| B33 | Filler-material layer | 5 | 10 | - | - | - | - | - | - | - | - | - | bal. | 577 | No |
| | Intermediate-material layer | 1 | - | - | - | 0.1 | - | 0.05 | - | - | - | - | bal. | | |
| | Core layer | - | - | - | 1.2 | - | - | - | - | - | - | - | bal. | | |
| B34 | Filler-material layer | 5 | 10 | - | - | - | - | - | - | - | - | - | bal. | 577 | No |
| | Intermediate-material layer | 1 | - | - | - | 0.2 | - | 0.05 | - | - | - | - | bal. | | |
| | Core layer | - | - | - | 1.2 | - | - | - | - | - | - | - | bal. | | |
| B35 | Filler-material layer | 5 | 10 | - | - | - | - | - | - | - | - | - | bal. | 577 | No |
| | Intermediate-material layer | 1 | - | - | - | 6 | - | 0.05 | - | - | - | - | bal. | | |
| | Core layer | - | - | - | 1.2 | - | - | - | - | - | - | - | bal. | | |
| B36 | Filler-material layer | 5 | 10 | - | - | - | - | - | - | - | - | - | bal. | 577 | No |
| | Intermediate-material layer | 1 | - | - | - | 8 | - | 0.05 | - | - | - | - | bal. | | |
| | Core layer | - | - | - | 1.2 | - | - | - | - | - | - | - | bal. | | |
| B37 | Filler-material layer | 5 | 10 | - | - | - | - | - | - | - | - | - | bal. | 577 | No |
| | Intermediate-material layer | 1 | - | - | - | 3 | - | - | 0.1 | - | - | - | bal. | | |
| | Core layer | - | - | - | 1.2 | 0.6 | - | - | - | - | - | - | bal. | | |
| B38 | Filler-material layer | 5 | 10 | - | - | - | - | - | - | - | - | - | bal. | 577 | No |
| | Intermediate-material layer | 1 | 10 | - | - | 3 | - | 0.6 | - | - | - | - | bal. | | |
| | Core layer | - | - | - | 1.2 | - | - | - | - | - | - | - | bal. | | |
| B39 | Filler-material layer | 5 | 10 | - | - | - | - | - | - | - | - | - | bal. | 577 | No |
| | Intermediate-material layer | 1 | - | - | - | 3 | 0.2 | 0.1 | - | - | - | - | bal. | | |
| | Core layer | - | - | - | 1.2 | 0.6 | - | - | - | - | - | - | bal. | | |
| B40 | Filler-material layer | 5 | 10 | - | - | - | - | - | - | - | - | - | bal. | 577 | No |
| | Intermediate-material layer | 1 | - | 1.2 | - | 3 | 3.5 | 0.6 | - | - | - | - | bal. | | |
| | Core layer | - | - | - | 1.2 | - | - | - | - | - | - | - | bal. | | |

**Table 6**

| Material No. | Configuration | Cladding Percentage (%) | Chemical Composition (Mass%) | | | | | | | | | | | Solidus Temperature of Filler Material (°C) | Etching Treatment |
|---|---|---|---|---|---|---|---|---|---|---|---|---|---|---|---|
| | | | Si | Cu | Mn | Mg | Zn | Li | Be | Ca | Ba | Bi | Al | | |
| B41 | Filler-material layer | 5 | 10 | - | - | - | - | - | - | - | - | - | bal. | 577 | No |
| | Intermediate-material layer | 1 | - | - | - | - | - | 0.05 | - | - | - | 0.01 | bal. | | |
| | Core layer | - | - | - | 1.2 | - | - | - | - | - | - | - | bal. | | |
| B42 | Filler-material layer | 5 | 10 | - | - | - | - | - | - | - | - | - | bal. | 577 | No |
| | Intermediate-material layer | 1 | - | - | - | - | - | 0.05 | - | - | - | 0.02 | bal. | | |
| | Core layer | - | - | - | 1.2 | - | - | - | - | - | - | - | bal. | | |
| B43 | Filler-material layer | 5 | 10 | - | - | - | - | - | - | - | - | - | bal. | 577 | No |
| | Intermediate-material layer | 1 | - | - | - | - | - | 0.05 | - | - | - | 1.2 | bal. | | |
| | Core layer | - | - | - | 1.2 | - | - | - | - | - | - | - | bal. | | |
| B44 | Filler-material layer | 5 | 10 | - | - | - | - | - | - | - | - | - | bal. | 577 | No |
| | Intermediate-material layer | 1 | - | - | - | 3 | 0.2 | 0.1 | - | - | - | 0.08 | bal. | | |
| | Core layer | - | - | - | 1.2 | 0.6 | - | - | - | - | - | - | bal. | | |
| B45 | Filler-material layer | 5 | 13 | - | - | - | - | 0.006 | - | 0.01 | - | - | bal. | 577 | No |
| | Intermediate-material layer | 1 | - | - | - | 3 | 0.2 | 0.1 | - | - | - | 0.08 | bal. | | |
| | Core layer | - | - | - | 1.2 | 0.6 | - | - | - | - | - | - | bal. | | |
| B46 | Filler-material layer | 5 | 16 | - | - | - | - | 0.006 | - | 0.01 | - | - | bal. | 577 | No |
| | Intermediate-material layer | 1 | - | - | - | 3 | 0.2 | 0.1 | - | - | - | 0.08 | bal. | | |
| | Core layer | - | - | - | 1.2 | 0.6 | - | - | - | - | - | - | bal. | | |
| B47 | Filler-material layer | 5 | 13 | - | - | - | - | 0.006 | - | 0.01 | - | 0.05 | bal. | 577 | No |
| | Intermediate-material layer | 1 | - | - | - | 3 | 0.2 | 0.1 | - | - | - | 0.08 | bal. | | |
| | Core layer | - | - | - | 1.2 | 0.6 | - | - | - | - | - | - | bal. | | |
| B48 | Filler-material layer | 5 | 13 | - | - | - | - | 0.006 | - | 0.01 | - | 0.05 | bal. | 577 | Yes (alkali) |
| | Intermediate-material layer | 1 | - | - | - | 3 | 0.2 | 0.1 | - | - | - | 0.08 | bal. | | |
| | Core layer | - | - | - | 1.2 | 0.6 | - | - | - | - | - | - | bal. | | |
| B49 | Filler-material layer | 5 | 10 | - | - | - | - | - | - | - | - | - | bal. | 577 | No |
| | Intermediate-material layer | 2.5 | 10 | - | - | 2 | - | - | - | - | - | 0.08 | bal. | | |
| | Core layer | - | - | - | 1.2 | - | - | - | - | - | - | - | bal. | | |
| B50 | Filler-material layer | 5 | 10 | - | - | - | - | - | - | - | - | - | bal. | 577 | No |
| | Intermediate-material layer | 2.5 | - | - | - | 1.5 | - | - | - | - | - | 0.1 | bal. | | |
| | Core layer | - | - | - | 1.2 | 0.6 | - | - | - | - | - | - | bal. | | |

**Table 7**

| Material No. | Configuration | Cladding Percentage (%) | Chemical Composition (Mass%) | | | | | | | | | | | Solidus Temperature of Filler Material (°C) | Etching Treatment |
|---|---|---|---|---|---|---|---|---|---|---|---|---|---|---|---|
| | | | Si | Cu | Mn | Mg | Zn | Li | Be | Ca | Ba | Bi | Al | | |
| Cl | Outer-surface-side filler-material layer | 5 | 10 | - | - | - | - | - | - | - | - | - | bal. | 577 | No |
| | Core layer | - | | - | 1.2 | - | - | - | - | - | - | - | bal. | | |
| | Inner-surface-side filler-material layer | 5 | 10 | - | - | - | - | - | - | - | - | - | bal. | 577 | |
| C2 | Outer-surface-side filler-material layer | 5 | 10 | - | - | - | - | - | - | - | - | - | bal. | 577 | No |
| | Core layer | - | - | - | 1.2 | 0.6 | - | - | - | - | - | - | bal. | | |
| | Inner-surface-side filler-material layer | 5 | 10 | - | - | - | - | - | - | - | - | - | bal. | 577 | |
| D1 | Outer-surface-side filler-material layer | 5 | 10 | - | - | - | - | - | - | - | - | - | bal. | 577 | No |
| | Intermediate-material layer | 1 | - | - | - | - | - | - | - | 0.09 | 0.08 | - | bal. | | |
| | Core layer | - | | - | 1.2 | 0.6 | - | - | - | - | - | - | bal. | | |
| | Inner-surface-side filler-material layer | 5 | 10 | - | - | - | - | - | - | - | - | - | bal. | 577 | |
| D2 | Outer-surface-side filler-material layer | 5 | 10 | - | - | - | - | - | - | - | - | - | bal. | 577 | No |
| | Intermediate-material layer | 1 | 10 | - | - | - | - | - | 0.1 | - | - | - | bal. | | |
| | Core layer | - | | - | 1.2 | 0.6 | - | - | - | - | - | - | bal. | | |
| | Inner-surface-side filler-material layer | 5 | 10 | - | - | - | - | - | - | - | - | - | bal. | 577 | |
| D3 | Outer-surface-side filler-material layer | 5 | 10 | - | - | - | - | - | - | - | - | - | bal. | 577 | No |
| | Intermediate-material layer | 1 | 10 | 1.2 | - | - | 3.5 | - | 0.1 | - | - | - | bal. | | |
| | Core layer | - | - | - | 1.2 | 0.6 | - | - | - | - | - | - | bal. | | |
| | Inner-surface-side filler-material layer | 5 | 10 | - | - | - | - | - | - | - | - | - | bal. | 577 | |
| D4 | Outer-surface-side filler-material layer | 5 | 10 | - | - | - | - | - | - | - | - | - | bal. | 577 | No |
| | Intermediate-material layer | 1 | 16 | - | - | 3 | - | - | - | - | - | - | bal. | | |
| | Core layer | - | | - | 1.2 | 0.6 | - | - | - | - | - | - | bal. | | |
| | Inner-surface-side filler-material layer | 5 | 10 | - | - | - | 3.4 | - | - | - | - | - | bal. | 569 | |
| D5 | Outer-surface-side filler-material layer | 5 | 4 | - | - | - | - | 0.01 | 0.01 | - | - | - | bal. | 577 | No |
| | Intermediate-material layer | 1 | 10 | 1.2 | - | 3 | 3.5 | - | 0.1 | - | - | 0.08 | bal. | | |
| | Core layer | - | - | - | 1.2 | 0.6 | - | - | - | - | - | - | bal. | | |
| | Inner-surface-side filler-material layer | 5 | 10 | 0.6 | - | - | 3.4 | - | - | - | - | - | bal. | 563 | |
| D6 | Outer-surface-side filler-material layer | 5 | 10 | - | - | - | - | - | - | - | - | - | bal. | 577 | No |
| | Intermediate-material layer | 2.5 | - | - | - | 3 | - | - | - | - | - | 0.1 | bal. | | |
| | Core layer | - | - | - | 1.2 | 0.6 | - | - | - | - | - | - | bal. | | |
| | Inner-surface-side filler-material layer | 5 | 10 | - | - | - | - | - | - | - | - | - | bal. | 577 | |
| E1 | Outer-surface-side filler-material layer | 5 | 10 | - | - | - | - | - | - | - | - | - | bal. | 577 | No |
| | Intermediate-material layer | 2.5 | 10 | - | - | 2 | - | - | - | - | - | 0.08 | bal. | | |
| | Core layer | - | - | - | 1.2 | - | - | - | - | - | - | - | bal. | | |
| | Intermediate-material layer | 2.5 | 10 | - | - | 2 | - | - | - | - | - | 0.08 | bal. | | |
| | Inner-surface-side filler-material layer | 5 | 10 | - | - | - | - | - | - | - | - | - | bal. | 577 | |

**Table 8**

| Test Body No. | Configuration of Test Body | | Temperature-Rise Time | Formation State of Fillets | | Remarks |
|---|---|---|---|---|---|---|
| | Component Part | Material No. | | Join Parts between Header Part and Tubular Parts | Join Parts between Header Part and Tank Part | |
| 1 | Header part and tank part | A2 | 12 min | C | C | |
| | Tubular member | Extruded multi-hole pipe | | | | |
| 2 | Header part and tank part | A3 | 12 min | C | C | |
| | Tubular member | Extruded multi-hole pipe | | | | |
| 3 | Header part and tank part | A4 | 12 min | C | C | |
| | Tubular member | Extruded multi-hole pipe | | | | |
| 4 | Header part and tank part | A6 | 12 min | C | C | |
| | Tubular member | Extruded multi-hole pipe | | | | |
| 5 | Header part and tank part | A7 | 12 min | C | C | |
| | Tubular member | Extruded multi-hole pipe | | | | |
| 6 | Header part and tank part | A8 | 12 min | C | C | |
| | Tubular member | Extruded multi-hole pipe | | | | |
| 7 | Header part and tank part | A9 | 12 min | C | C | |
| | Tubular member | Extruded multi-hole pipe | | | | |
| 8 | Header part and tank part | A10 | 12 min | C | C | |
| | Tubular member | Extruded multi-hole pipe | | | | |
| 9 | Header part and tank part | A11 | 12 min | C | C | |
| | Tubular member | Extruded multi-hole pipe | | | | |
| 10 | Header part and tank part | A12 | 12 min | C | C | |
| | Tubular member | Extruded multi-hole pipe | | | | |
| 11 | Header part and tank part | A13 | 12 min | C | C | |
| | Tubular member | Extruded multi-hole pipe | | | | |
| 12 | Header part and tank part | A14 | 12 min | C | B | |
| | Tubular member | Extruded multi-hole pipe | | | | |
| 13 | Header part and tank part | A15 | 12 min | C | B | |
| | Tubular member | Extruded multi-hole pipe | | | | |
| 14 | Header part and tank part | B1 | 12 min | C | C | |
| | Tubular member | Extruded multi-hole pipe | | | | |
| 15 | Header part and tank part | B2 | 12 min | C | C | |
| | Tubular member | Extruded multi-hole pipe | | | | |
| 16 | Header part and tank part | B3 | 12 min | C | C | |
| | Tubular member | Extruded multi-hole pipe | | | | |
| 17 | Header part and tank part | B4 | 12 min | C | C | |
| | Tubular member | Extruded multi-hole pipe | | | | |
| 18 | Header part and tank part | B5 | 12 min | C | C | |
| | Tubular member | Extruded multi-hole pipe | | | | |
| 19 | Header part and tank part | B6 | 12 min | C | C | |
| | Tubular member | Extruded multi-hole pipe | | | | |
| 20 | Header part and tank part | B7 | 12 min | C | C | |
| | Tubular member | Extruded multi-hole pipe | | | | |
| 21 | Header part and tank part | B8 | 12 min | C | C | |
| | Tubular member | Extruded multi-hole pipe | | | | |
| 22 | Header part and tank part | B9 | 12 min | C | B | |
| | Tubular member | Extruded multi-hole pipe | | | | |
| 23 | Header part and tank part | B10 | 12 min | C | B | |
| | Tubular member | Extruded multi-hole pipe | | | | |
| 24 | Header part and tank part | B11 | 12 min | C | B | |
| | Tubular member | Extruded multi-hole pipe | | | | |
| 25 | Header part and tank part | B12 | 12 min | B | B | |
| | Tubular member | Extruded multi-hole pipe | | | | |
| 26 | Header part and tank part | B13 | 12 min | B | B | |
| | Tubular member | Extruded multi-hole pipe | | | | |
| 27 | Header part and tank part | B14 | 12 min | B | B | |
| | Tubular member | Extruded multi-hole pipe | | | | |
| 28 | Header part and tank part | B16 | 12 min | B | B | |
| | Tubular member | Extruded multi-hole pipe | | | | |

**Table 9**

| Test Body No. | Configuration of Test Body | | Temperature-Rise Time | Formation State of Fillets | | Remarks |
|---|---|---|---|---|---|---|
| | Component Part | Material No. | | Join Parts between Header Part and Tubular Parts | Join Parts between Header Part and Tank Part | |
| 29 | Header part and tank part | B17 | 12 min | C | B | |
| | Tubular member | Extruded multi-hole pipe | | | | |
| 30 | Header part and tank part | B18 | 12 min | B | B | |
| | Tubular member | Extruded multi-hole pipe | | | | |
| 31 | Header part and tank part | B19 | 12 min | B | B | |
| | Tubular member | Extruded multi-hole pipe | | | | |
| 32 | Header part and tank part | B18 | 3 min | C | C | |
| | Tubular member | Extruded multi-hole pipe | | | | |
| 33 | Header part and tank part | B19 | 3 min | C | B | |
| | Tubular member | Extruded multi-hole pipe | | | | |
| 34 | Header part and tank part | B21 | 12 min | B | B | |
| | Tubular member | Extruded multi-hole pipe | | | | |
| 35 | Header part and tank part | B22 | 3 min | C | B | |
| | Tubular member | Extruded multi-hole pipe | | | | |
| 36 | Header part and tank part | B24 | 3 min | B | B | |
| | Tubular member | Extruded multi-hole pipe | | | | |
| 37 | Header part and tank part | B25 | 3 min | C | C | |
| | Tubular member | Extruded multi-hole pipe | | | | |
| 38 | Header part and tank part | B26 | 3 min | C | C | |
| | Tubular member | Extruded multi-hole pipe | | | | |
| 39 | Header part and tank part | B27 | 3 min | C | B | |
| | Tubular member | Extruded multi-hole pipe | | | | |
| 40 | Header part and tank part | B29 | 3 min | C | C | |
| | Tubular member | Extruded multi-hole pipe | | | | |
| 41 | Header part and tank part | B30 | 3 min | C | C | |
| | Tubular member | Extruded multi-hole pipe | | | | |
| 42 | Header part and tank part | B31 | 3 min | C | B | |
| | Tubular member | Extruded multi-hole pipe | | | | |
| 43 | Header part and tank part | B32 | 3 min | C | B | |
| | Tubular member | Extruded multi-hole pipe | | | | |
| 44 | Header part and tank part | B33 | 12 min | C | C | |
| | Tubular member | Extruded multi-hole pipe | | | | |
| 45 | Header part and tank part | B34 | 12 min | C | B | |
| | Tubular member | Extruded multi-hole pipe | | | | |
| 46 | Header part and tank part | B35 | 12 min | C | B | |
| | Tubular member | Extruded multi-hole pipe | | | | |
| 47 | Header part and tank part | B37 | 12 min | B | B | |
| | Tubular member | Extruded multi-hole pipe | | | | |
| 48 | Header part and tank part | B38 | 3 min | C | B | |
| | Tubular member | Extruded multi-hole pipe | | | | |
| 49 | Header part and tank part | B39 | 3 min | C | B | |
| | Tubular member | Extruded multi-hole pipe | | | | |
| 50 | Header part and tank part | B40 | 3 min | C | B | |
| | Tubular member | Extruded multi-hole pipe | | | | |
| 51 | Header part and tank part | B41 | 12 min | C | C | |
| | Tubular member | Extruded multi-hole pipe | | | | |
| 52 | Header part and tank part | B42 | 12 min | C | B | |
| | Tubular member | Extruded multi-hole pipe | | | | |
| 53 | Header part and tank part | B43 | 12 min | C | B | |
| | Tubular member | Extruded multi-hole pipe | | | | |
| 54 | Header part and tank part | B44 | 12 min | B | B | |
| | Tubular member | Extruded multi-hole pipe | | | | |
| 55 | Header part and tank part | B45 | 12 min | B | B | |
| | Tubular member | Extruded multi-hole pipe | | | | |
| 56 | Header part and tank part | B47 | 12 min | B | A | |
| | Tubular member | Extruded multi-hole pipe | | | | |
| 57 | Header part and tank part | B48 | 3 min | A | A | |
| | Tubular member | Extruded multi-hole pipe | | | | |

**Table 10**

| Test Body No. | Configuration of Test Body | | Temperature-Rise Time | Formation State of Fillets | | Remarks |
|---|---|---|---|---|---|---|
| | Component Part | Material No. | | Join Parts between Header Part and Tubular Parts | Join Parts between Header Part and Tank Part | |
| 58 | Header part and tank part | A1 | 12 min | E | E | |
| | Tubular member | Extruded multi-hole pipe | | | | |
| 59 | Header part and tank part | A3 | 12 min | D | C | |
| | Tubular member | Shaped plate material | | | | |
| 60 | Header part and tank part | A5 | 12 min | D | D | Erosion occurred |
| | Tubular member | Shaped plate material | | | | |
| 61 | Header part and tank part | B9 | 3 min | D | D | |
| | Tubular member | Extruded multi-hole pipe | | | | |
| 62 | Header part and tank part | B15 | 12 min | - | - | Cracks occurred during plate manufacture |
| | Tubular member | Extruded multi-hole pipe | | | | |
| 63 | Header part and tank part | B20 | 12 min | - | - | Cracks occurred during plate manufacture |
| | Tubular member | Extruded multi-hole pipe | | | | |
| 64 | Header part and tank part | B23 | 12 min | - | - | Cracks occurred during plate manufacture |
| | Tubular member | Extruded multi-hole pipe | | | | |
| 65 | Header part and tank part | B28 | 12 min | - | - | Cracks occurred during plate manufacture |
| | Tubular member | Extruded multi-hole pipe | | | | |
| 66 | Header part and tank part | B36 | 12 min | - | - | Cracks occurred during plate manufacture |
| | Tubular member | Extruded multi-hole pipe | | | | |
| 67 | Header part and tank part | B46 | 12 min | - | - | Cracks occurred during plate manufacture |
| | Tubular member | Extruded multi-hole pipe | | | | |
| 68 | Header part and tank part | B49 | 12 min | D | C | |
| | Tubular member | Shaped plate material | | | | |
| 69 | Header part and tank part | B50 | 12 min | D | C | |
| | Tubular member | Shaped plate material | | | | |
| 70 | Header part and tank part | C1 | 12 min | E | E | |
| | Tubular member | Extruded multi-hole pipe | | | | |
| 71 | Header part and tank part | C2 | 12 min | D | D | |
| | Tubular member | Extruded multi-hole pipe | | | | |
| 72 | Header part and tank part | D1 | 12 min | D | D | |
| | Tubular member | Extruded multi-hole pipe | | | | |
| 73 | Header part and tank part | D2 | 12 min | D | D | |
| | Tubular member | Extruded multi-hole pipe | | | | |
| 74 | Header part and tank part | D3 | 12 min | D | D | |
| | Tubular member | Extruded multi-hole pipe | | | | |
| 75 | Header part and tank part | D4 | 12 min | - | - | Cracks occurred during plate manufacture |
| | Tubular member | Extruded multi-hole pipe | | | | |
| 76 | Header part and tank part | D5 | 12 min | D | D | |
| | Tubular member | Extruded multi-hole pipe | | | | |
| 77 | Header part and tank part | D6 | 12 min | D | D | |
| | Tubular member | Shaped plate material | | | | |
| 78 | Header part and tank part | E1 | 12 min | D | D | |
| | Tubular member | Shaped plate material | | | | |

As can be understood from Table 8 and Table 9, in test body 1 to test body 57, a filler-material layer was not disposed in the interior of the hollow structure 2 prior to the performance of the brazing process. For that reason, in each of test body 1 to test body 57, satisfactory fillets F1, F2 could be formed at the outer surfaces of both the join parts 24 between the header part 21 and the tubular members 3 and the join parts 25 between the header part 21 and the tank part 22.

In addition, in each of test body 1 to test body 57, because the chemical compositions of the core layers, the filler-material layers, and the intermediate-material layers of the clad plates were within the specific ranges, the sizes of the fillets could be made larger easily and the fillets could be formed evenly.

On the other hand, in test body 58 shown in Table 10, because clad plates were used in which both the core layer and the filler-material layer did not contain an element, such as Mg, that breaks down the oxide films, fillet tearings occurred at the join parts 24 between the header part 21 and the tubular members 3 and the join parts 25 between the header part 21 and the tank part 22.

In each of test bodies 59, 68, and 69, because shaped plate materials having filler material on the outer-surface sides were used as the tubular members, the brazing process was performed in the state in which the filler material was disposed in the interior of the hollow structure 2 and therefore the filler was drawn into the interior of the hollow structure 2. As a result, fillet tearings occurred at the join parts 24 between the header part 21 and the tubular members 3.

In test body 60, because shaped plate materials were used for the tubular members, the filler was drawn into the interior of the hollow structure 2 in the brazing process. As a result, fillet tearings occurred at the join parts 24 between the header part 21 and the tubular members 3 and the join parts 25 between the header part 21 and the tank part 22. In addition, in test body 60, because the Mg contained in the core layer was excessive, erosion occurred in the brazing process.

In each of test bodies 70-74 and test bodies 76-78, because clad plates having an inner-side filler material layer were used, the brazing process was performed in the state in which the filler-material layer was disposed in the interior of the hollow structure 2. For that reason, the filler was drawn into the interior of the hollow structure 2 and therefore fillet tearings occurred at the join parts 24 between the header part 21 and the tubular members 3 and the join parts 25 between the header part 21 and the tank part 22.

In test body 61, because the temperature-rise time in the brazing process was short, sufficient brazing was not achieved and therefore fillet tearings occurred at the join parts 24 between the header part 21 and the tubular members 3 and the join parts 25 between the header part 21 and the tank part 22. It is noted that fillet tearings did not occur in test body 22 (refer to Table 8), in which the temperature of the hollow structure 2 having the identical configuration was raised slowly.

In each of test bodies 62-67 and test body 75, elements, such as Si, contained in the intermediate-material layers and the filler-material layers were excessive. Consequently, cracks occurred in the process of manufacturing the clad plates, and the header parts 21 and the like could not be manufactured.

## Claims

1. An aluminum-structure manufacturing method comprising:
preparing a clad plate that: has a multi-layer structure of two layers or three or more layers that include a core layer composed of an aluminum material, and a filler-material layer composed of an Al-Si alloy disposed on only one surface side of the core layer; and contains, in at least one layer of the multi-layer structure, an element that breaks down an oxide film;
preparing a tubular member composed of an aluminum material;
manufacturing a hollow structure from the clad plate, the outer-surface side of the hollow structure being composed of the filler-material layer and the hollow structure having a through hole into which the tubular member is inserted;
assembling an aluminum structure in which the tubular member is inserted into the through hole and an end part of the tubular member is disposed in the interior of the hollow structure; and
performing a brazing process in which the aluminum structure is heated in an inert-gas atmosphere, and thereby the hollow structure and the tubular member are joined by the filler-material layer of the clad plate.

2. The aluminum-structure manufacturing method according to claim 1, wherein the core layer is composed of an aluminum alloy having a chemical composition that contains Mg: 0.2%-1.3% (mass%; likewise, hereinbelow), the remainder being composed of Al and unavoidable impurities.

3. The aluminum-structure manufacturing method according to claim 1 or 2, wherein:
the clad plate further has an intermediate-material layer disposed between the core layer and the filler-material layer; and
the intermediate-material layer is composed of an aluminum alloy having a chemical composition that contains one or two or more selected from the group consisting of Li: 0.05% or more, Be: 0.05% or more, Ba: 0.05% or more, and Ca: 0.05% or more, the remainder being composed of Al and unavoidable impurities.

4. The aluminum-structure manufacturing method according to claim 3, wherein the aluminum alloy that constitutes the intermediate-material layer further contains Si: 4%-13%.

5. The aluminum-structure manufacturing method according to claim 3 or 4, wherein the aluminum alloy that constitutes the intermediate-material layer further contains at least one among Zn: 0.2%-6% and Cu: 0.1%-3%.

6. The aluminum-structure manufacturing method according to any one of claims 3-5, wherein the aluminum alloy that constitutes the intermediate-material layer further contains Mg: 0.2%-6%.

7. The aluminum-structure manufacturing method according to claim 1 or 2, wherein:
the clad plate further has an intermediate-material layer disposed between the core layer and the filler-material layer; and
the intermediate-material layer is composed of an aluminum alloy having a chemical composition that contains Mg: 0.2%-6%, the remainder being composed of Al and unavoidable impurities.

8. The aluminum-structure manufacturing method according to claim 7, wherein the aluminum alloy that constitutes the intermediate-material layer further contains Si: 4%-13%.

9. The aluminum-structure manufacturing method according to any one of claims 3-8, wherein the aluminum alloy that constitutes the intermediate-material layer further contains Bi: 0.02%-1.2%.

10. The aluminum-structure manufacturing method according to any one of claims 1-9, wherein the filler-material layer is composed of an aluminum alloy having a chemical composition that indispensably contains Si: 6%-13% and further contains one or two or more selected from the group consisting of Mg: 0.2%-1.2%, Li: 0.004%-0.1%, Be: 0.004%-0.1%, and Ca: 0.005%-0.03%, the remainder being composed of Al and unavoidable impurities.

11. The aluminum-structure manufacturing method according to claim 10, wherein the aluminum alloy that constitutes the filler-material layer further contains Bi: 0.004%-0.2%.

12. The aluminum-structure manufacturing method according to any one of claims 1-11, wherein prior to the brazing process, the hollow structure is etched using an acid or an alkali.
